# EUROPEAN PATENT APPLICATION

(11) **EP 4 712 218 A1**
(43) Date of publication of application: **18.03.2026**
(21) Application number: 25195967.2
(22) Date of filing: 14.08.2025
(51) Int. Cl.: H01M 50/103, H01M 50/136, H01M 50/15, H01M 50/171, H01M 50/184, H01M 50/186, H01M 50/342

(54) **BATTERY CELL AND BATTERY MODULE INCLUDING THE SAME**

(30) Priority: 13.09.2024 US 202463694556 P; 21.11.2024 KR 20240167532
(71) Applicant: SAMSUNG SDI CO., LTD., Yongin-si, Gyeonggi-do 17084 (KR)
(72) Inventor: YEOM, Gil Choun, Suwon-si, Gyeonggi-do 16678 (KR); JI, Yong Jun, Suwon-si, Gyeonggi-do 16678 (KR); KIM, Jeong Ho, Suwon-si, Gyeonggi-do 16678 (KR); MOON, Dae Yon, Suwon-si, Gyeonggi-do 16678 (KR); PARK, Sang Ho, Suwon-si, Gyeonggi-do 16678 (KR)
(74) Representative: Gulde & Partner

(57) **Abstract**

A battery cell and a battery module including the same are disclosed. A battery cell includes an electrode assembly, a case accommodating the electrode assembly, a cap plate sealing the case, a pair of terminals protruding from the cap plate and spaced apart from each other in a first direction, a vent between the terminals, a first insulation sheet facing the cap plate, and a second insulation sheet extending from the first insulation sheet and facing the case.

## Description

### BACKGROUND

### 1. Field

Aspects of embodiments of the present disclosure relate to a battery cell and a battery module including the same.

### 2. Discussion of Related Art

In general, due to the recent proliferation of electronic devices using batteries, such as mobile phones, notebook computers, and electric vehicles, the demand for secondary batteries having high energy density and high capacity has rapidly increased. Accordingly, research and development for improving the performance of a lithium secondary battery are being actively conducted.

A lithium secondary battery is a battery including a positive electrode and a negative electrode including an active material capable of intercalating and deintercalating lithium ions, and an electrolyte solution, and generates energy through oxidation/reduction reactions when lithium ions are intercalated/deintercalated at the positive and negative electrodes.

The above-described information disclosed in the technology that forms the background of the present disclosure is provided to improve understanding of the background of the present disclosure, and thus may include information that does not constitute the related art.

### SUMMARY

According to an aspect of embodiments of the present disclosure a battery cell and a battery module including the same, which are capable of preventing chain ignition, are provided.

The above and other aspects and features of the present disclosure will be described in or will be apparent from the following description of some embodiments of the present disclosure.

According to one or more embodiments of the present disclosure, a battery cell includes an electrode assembly, a case accommodating the electrode assembly, a cap plate sealing the case, a pair of terminals protruding from the cap plate and spaced apart from each other in a first direction, a vent between the terminals, a first (thermal) insulation sheet facing the cap plate, and a second insulation (thermal) sheet extending from the first insulation sheet and facing the case.

The first insulation sheet may be between the terminals.

An area of the first insulation sheet may be greater than an area of the vent.

Opposite end portions of the first insulation sheet, which are spaced apart from each other in the first direction, may be curved.

The first insulation sheet may include a fracture portion facing the vent and configured to be opened by a pressure of a gas discharged from the vent.

The battery cell may further include a first adhesive member between the first insulation sheet and the cap plate to fix the first insulation sheet.

The first adhesive member may include a pair of blocking portions spaced apart from each other in a second direction intersecting the first direction.

The blocking portions may be at opposite sides of the vent.

A distance between the blocking portions may be equal to or greater than a width of the vent.

A total of widths of the blocking portions and a width of the vent may be equal to or less than a width of the cap plate.

A length of the blocking portion may be equal to or greater than a length of the vent.

The battery cell may further include one or more pinholes passing through the first insulation sheet, and an adhesive filler protruding from the first adhesive member and arranged in a pinhole of the one or more pinholes.

The second insulation sheet may include a pair of second insulation sheets facing different surfaces of the case.

The case may include a bottom portion, a pair of first side portions extending from the bottom portion and facing each other in the first direction, and a pair of second side portions extending from the bottom portion and facing each other in a second direction intersecting the first direction, and the second insulation sheet may face a second side portion of the pair of second side portions.

An area of the second side portion may be greater than an area of a first side portion of the pair of first side portions.

The battery cell may further include a first adhesive member between the first insulation sheet and the cap plate to fix the first insulation sheet, and a second adhesive member between the second insulation sheet and the second side portion to fix the second insulation sheet.

The second adhesive member may include a pair of side adhesive portions spaced apart from the first adhesive member and facing each other in the first direction.

The second adhesive member may further include an extension adhesive portion extending from the first adhesive member and arranged between the side adhesive portions.

The battery cell may further include a third adhesive member at an outer side of the second insulation sheet.

According to one or more embodiments of the present disclosure, a battery module includes a housing, and a plurality of battery cells accommodated in the housing, wherein each of the battery cells may include an electrode assembly, a case accommodating the electrode assembly, a cap plate sealing the case, a pair of terminals protruding from the cap plate and spaced apart from each other in a first direction, a vent between the terminals, a first insulation sheet facing the cap plate, and a second insulation sheet extending from the first insulation sheet and facing the case.

### BRIEF DESCRIPTION OF THE DRAWINGS

The drawings included with this specification illustrate some embodiments of the present disclosure, and further describe aspects and features of the present disclosure together with the detailed description of the present disclosure. However, the present disclosure is not to be construed as being limited to the drawings.
- FIG. 1: is a schematic perspective view illustrating a configuration of a battery module according to an embodiment of the present disclosure;
- FIG. 2: is a schematic cross-sectional view illustrating the configuration of the battery module of FIG. 1;
- FIG. 3: is a schematic perspective view illustrating a configuration of the battery cell according to an embodiment of the present disclosure;
- FIG. 4: is a schematic exploded perspective view illustrating the configuration of the battery cell of FIG. 3;
- FIG. 5: is a schematic cross-sectional view illustrating the configuration of the battery cell of FIG. 3;
- FIG. 6: is a schematic plan view illustrating the configuration of the battery cell of FIG. 3;
- FIG. 7: is a schematic view illustrating a configuration of an electrode assembly according to an embodiment of the present disclosure;
- FIG. 8: is a schematic plan view illustrating a configuration of a first insulation sheet and a second insulation sheet according to an embodiment of the present disclosure;
- FIG. 9: is a rear view illustrating the first insulation sheet and the second insulation sheet illustrated in FIG. 8;
- FIG. 10: is a cross-sectional view along the line 10-10' in FIG. 6;
- FIG. 11: is a cross-sectional view along the line 11-11' in FIG. 6;
- FIG. 12: is a schematic view illustrating an operation state of the battery module according to an embodiment of the present disclosure;
- FIG. 13: is a schematic view illustrating a configuration of a first insulation sheet according to another embodiment of the present disclosure;
- FIG. 14: is a schematic view illustrating a modified example of the first insulation sheet illustrated in FIG. 13;
- FIG. 15: is a schematic perspective view illustrating a configuration of a battery cell according to another embodiment of the present disclosure;
- FIG. 16: is a schematic cross-sectional view along the line 16-16' in FIG. 15;
- FIG. 17: is a schematic perspective view illustrating a configuration of a battery cell according to another embodiment of the present disclosure; and
- FIG. 18: is a schematic cross-sectional view illustrating a configuration of a battery module according to another embodiment of the present disclosure.

### DETAILED DESCRIPTION

Herein, some embodiments of the present disclosure will be described, in further detail, with reference to the accompanying drawings. The terms or words used in this specification and claims are not to be construed as being limited to the usual or dictionary meaning and are to be interpreted as having meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not necessarily represent all of the technical aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer, or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element, or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections are not to be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are the same or substantially the same. Thus, the phrase "the same" or "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part, or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

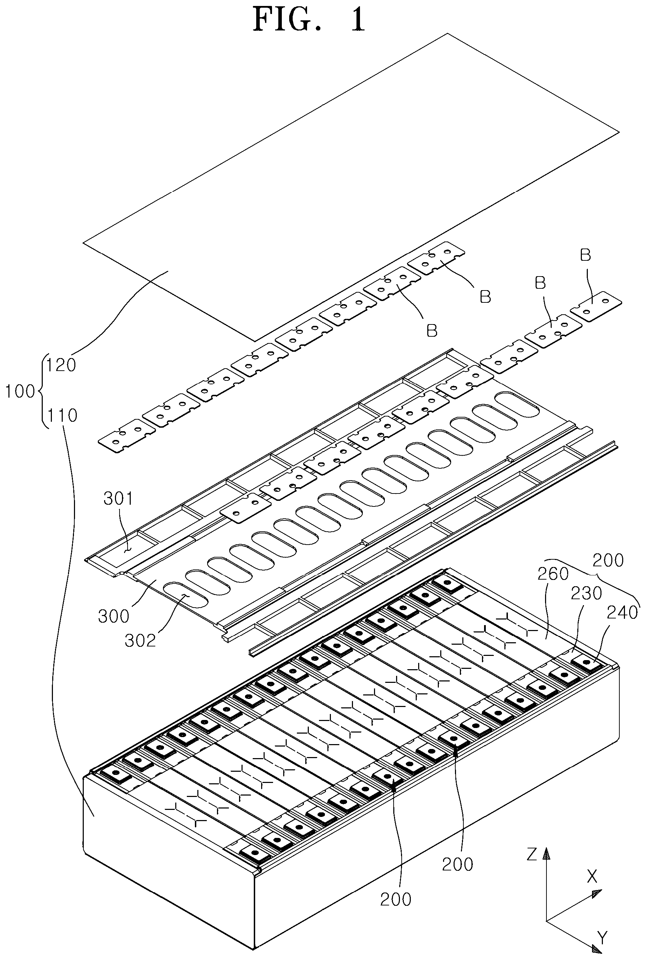

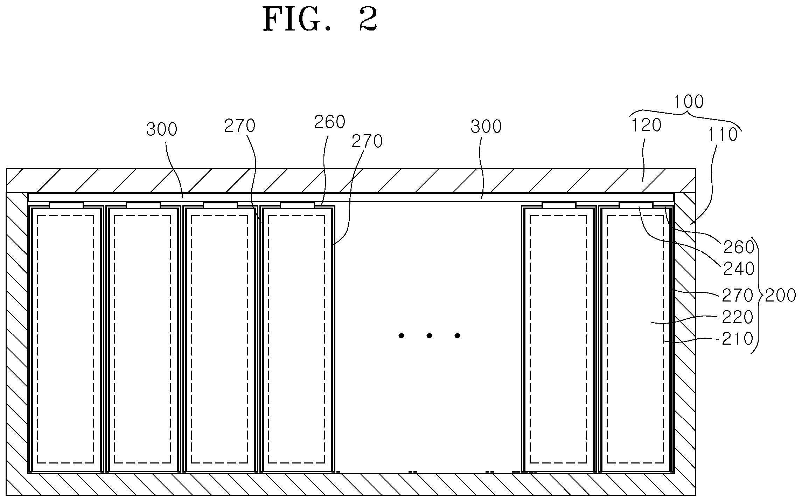

FIG. 1 is a schematic perspective view illustrating a configuration of a battery module according to an embodiment of the present disclosure; and FIG. 2 is a schematic cross-sectional view illustrating the configuration of the battery module of FIG. 1.

As will be described below, a first direction may be a direction parallel to a Y-axis based on FIG. 1, a second direction may be a direction parallel to an X-axis based on FIG. 1, and a third direction may be a direction parallel to a Z-axis based on FIG. 1. The same definition of the directions may apply to the other figures.

Referring to FIGS. 1 and 2, the battery module according to an embodiment may include a housing 100 and a battery cell 200.

The housing 100 may support the battery cell 200 and protect the battery cell 200 from an external impact and foreign substances.

The housing 100 may include a housing body 110 and a housing cover 120.

The housing body 110 may provide a space in which the battery cell 200 is accommodated.

The housing body 110 according to an embodiment may be formed to have a box shape with an empty interior and an open side. For example, based on FIG. 1, the open side of the housing body 110 may be disposed perpendicular to the third direction and to face upward. However, a cross-sectional shape of the housing body 110 is not limited to the quadrangular shape illustrated in FIG. 1 and may be varied in design to have any of various shapes, such as a polygon, circle, oval, and the like.

The housing cover 120 may be joined to the housing body 110 to close an internal space of the housing body 110.

The housing cover 120 according to the present embodiment may be formed to have a generally plate shape. The housing cover 120 may be disposed perpendicular to the third direction. The housing cover 120 may be disposed opposite to the open side of the housing body 110 in the third direction. The housing cover 120 may be fixed to an upper end portion of the housing body 110 by any of various types of joining methods, such as bolting, welding, fitting, and the like.

The battery cell 200 may function as a unit structure which stores and supplies power in the battery module. The battery cell 200 may be disposed inside the housing 100.

The battery cell 200 may be provided as a plurality of battery cells. The plurality of battery cells 200 may be arranged in multiple rows inside the housing 100. As an example, the plurality of battery cells 200 may be arranged in multiple rows in the second direction inside the housing body 110. However, an arrangement of the plurality of battery cells 200 is not limited thereto, and the plurality of battery cells 200 may be arranged in multiple rows in the first direction inside the housing body 110 or arranged in multiple rows in the second direction and the first direction.

Herein, an example in which the battery cell 200 is a prismatic lithium ion secondary battery will be described. However, the present disclosure is not limited thereto, and the battery cell 200 may be a lithium polymer battery or a cylindrical battery, for example.

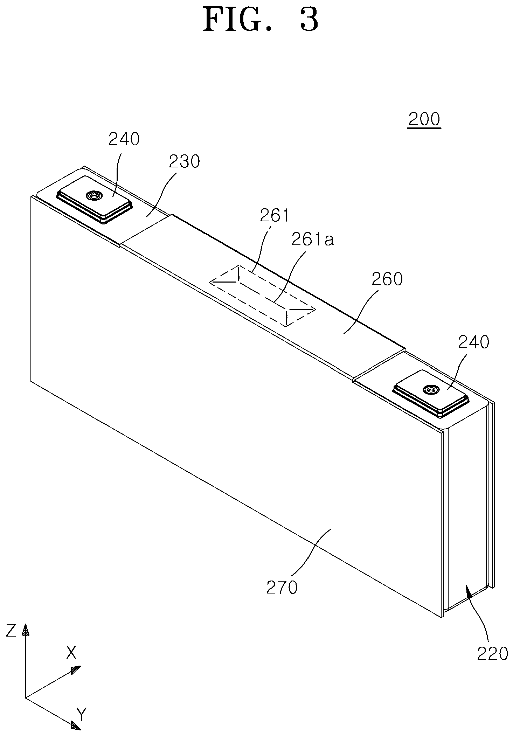

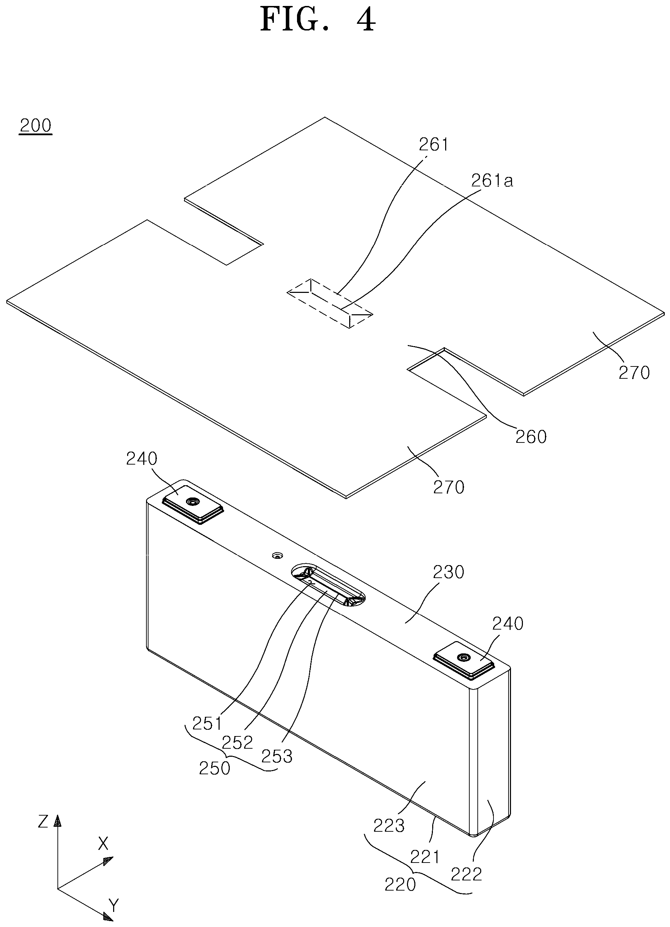

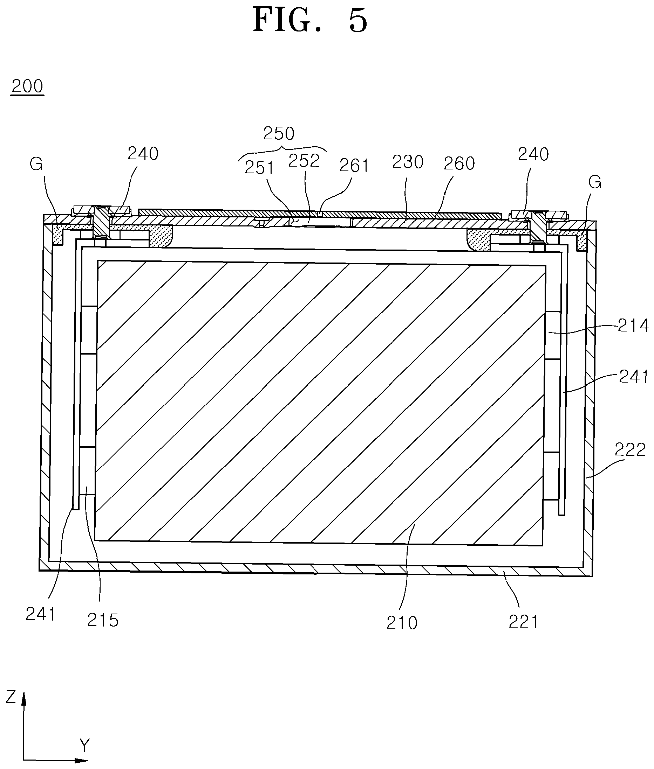

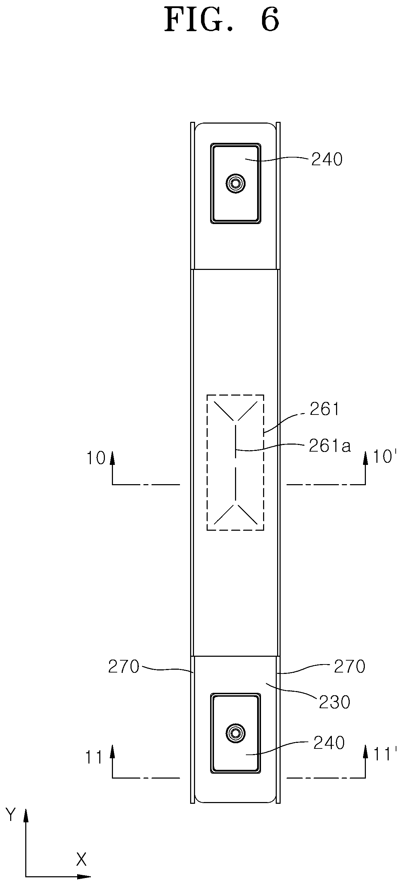

FIG. 3 is a schematic perspective view illustrating a configuration of a battery cell according to an embodiment of the present disclosure; FIG. 4 is a schematic exploded perspective view illustrating the configuration of the battery cell of FIG. 3; FIG. 5 is a schematic cross-sectional view illustrating the configuration of the battery cell of FIG. 3; and FIG. 6 is a schematic plan view illustrating the configuration of the battery cell of FIG. 3.

Referring to FIGS. 3 to 6, the battery cell 200 according to an embodiment includes an electrode assembly 210, a case 220, a cap plate 230, a terminal 240, a vent 250, a first insulation sheet 260, and a second insulation sheet 270.

The electrode assembly 210 may function as a unit structure which performs charging and discharging operations of power in the battery cell 200. The electrode assembly 210 may be accommodated inside the case 220.

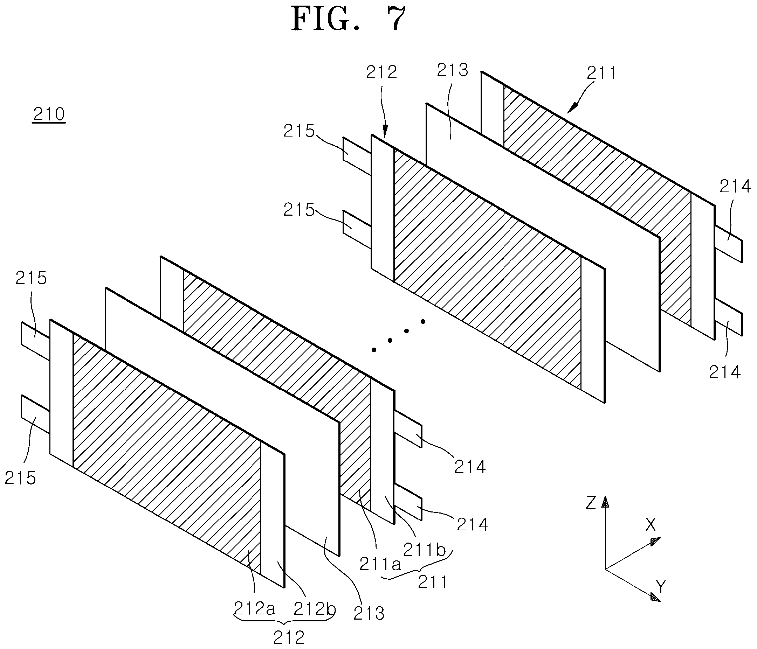

FIG. 7 is a schematic view illustrating a configuration of an electrode assembly according to an embodiment of the present disclosure.

Referring to FIGS. 3 to 7, the electrode assembly 210 according to an embodiment may include a first electrode 211, a second electrode 212, and a separator 213.

Herein, an example in which the electrode assembly 210 is formed in a stack type in which the first electrodes 211, the second electrodes 212, and the separators 213 are alternately stacked in the second direction will be described. However, the electrode assembly 210 is not limited thereto and, in an embodiment, may be formed in a jellyroll type in which the first electrode 211, the second electrode 212, and the separator 213 are sequentially stacked and wound around a winding axis.

The first electrode 211 may function as a positive electrode of the electrode assembly 210.

The first electrode 211 according to an embodiment may be formed to have a foil shape including a metallic material, such as aluminum or an aluminum alloy. Both, or opposite, surfaces of the first electrode 211 may be disposed perpendicular to the second direction. A type, size, shape, and the like of the first electrode 211 are not particularly limited as long as the first electrode 211 has conductivity and does not cause a chemical change in the secondary battery. A shape of the first electrode 211 may be varied in design to have any of various shapes, in addition to a rectangular shape.

The first electrode 211 may be provided as a plurality of first electrodes. The plurality of first electrodes 211 may be arranged in the second direction. A number of first electrodes 211 may be varied in design to any of various numbers, such as depending on a charging capacity or the like of the battery cell 200.

The first electrode 211 may include a first active material layer 211a.

The first active material layer 211a may be provided in a form in which at least a part of the first electrode 211 is coated with the first active material layer 211a. Both, or opposite, surfaces of the first electrode 211 may be coated with the first active material layer 211a, or only one surface of the first electrode 211 may be coated with the first active material layer 211a.

In an embodiment, the first electrode 211 functions as a positive electrode, and the first active material layer 211a may include a positive electrode active material.

The positive electrode active material may be a compound capable of reversible intercalation and deintercalation of lithium (a lithiated intercalation compound). In an embodiment, as the positive electrode active material, one or more of composite oxides of a metal selected from the group consisting of cobalt, manganese, nickel, iron, and a combination thereof and lithium may be used.

As an example, the positive electrode active material may include at least one of lithium-iron-phosphorus oxide (LiFePO₄, LFP), lithium-manganese-iron-phosphorus oxide (LiMnFePO₄, LMFP), and lithium-nickel-cobalt-manganese oxide (LiNiₓCo_{y}Mn_{z}O₂, NCM). Here, 0 < x < 1, 0 < y <1, 0 < z < 1, and x+y+z = 1 may be satisfied. The positive electrode active material may include only one of lithium-iron-phosphorus oxide (LiFePO₄, LFP), lithium-manganese-iron-phosphorus oxide (LiMnFePO₄, LMFP), and lithium-nickel-cobalt-manganese oxide (LiNiₓCo_{y}Mn_{z}O₂, NCM) or may include two or all of lithium-iron-phosphorus oxide (LiFePO₄, LFP), lithium-manganese-iron-phosphorus oxide (LiMnFePO₄, LMFP), and lithium-nickel-cobalt-manganese oxide (LiNiₓCo_{y}Mn_{z}O₂, NCM).

The first active material layer 211a may further include a positive electrode conductive material.

The positive electrode conductive material imparts conductivity to the first active material layer 211a, and any suitable electronically conductive material that does not cause a chemical change may be used. Examples of the positive electrode conductive material may include carbon-based materials, such as natural graphite, artificial graphite, carbon black, acetylene black, Ketjen black, carbon fibers, carbon nanofibers, and carbon nanotubes, metal-based materials in the form of a metal powder or metal fibers containing copper, nickel, aluminum, silver, and the like, conductive polymers, such as polyphenylene derivatives, or a mixture thereof.

The first active material layer 211a may further include a positive electrode binder.

The positive electrode binder well attaches particles constituting the positive electrode active material and also well attaches the positive electrode active material to the first electrode 211.

Examples of the positive electrode binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

If the aqueous binder is used as the positive electrode binder, the aqueous binder may further include a cellulose series compound capable of imparting viscosity. As the cellulose series compound, one or more of carboxymethyl cellulose, hydroxypropylmethyl cellulose, methyl cellulose, and an alkali metal salt thereof may be mixed and used. In an embodiment, the alkali metal may be Na, K, or Li.

The dry binder may be a polymer material capable of being fiberized, for example, polytetrafluoroethylene, polyvinylidene fluoride, a polyvinylidene fluoride-hexafluoropropylene copolymer, polyethylene oxide, or a combination thereof.

The first electrode 211 may include a first uncoated portion 211b which is not coated with the first active material layer 211a. The first uncoated portion 211b according to an embodiment may be disposed at an end region of the first electrode 211 in the first direction. However, the first uncoated portion 211b is not limited thereto and, in an embodiment, may be formed over an entire edge region of the first electrode 211.

The second electrode 212 may function as a negative electrode of the electrode assembly 210.

The second electrode 212 according to an embodiment may be formed to have a foil shape including a metallic material, such as copper, a copper alloy, nickel, or a nickel alloy. Both, or opposite, surfaces of the second electrode 212 may be disposed perpendicular to the second direction. A type, size, shape, and the like of the second electrode 212 are not particularly limited as long as the second electrode 212 has conductivity and does not cause a chemical change in the secondary battery. A cross-sectional shape of the second electrode 212 may be varied in design to have any of various shapes, in addition to the rectangular shape illustrated in FIG. 7.

The second electrode 212 may be provided as a plurality of second electrodes. The plurality of second electrodes 212 may be arranged in the second direction. The plurality of first electrodes 211 and the plurality of second electrodes 212 may be alternately disposed in the second direction.

The second electrode 212 may include a second active material layer 212a and a second uncoated portion 212b.

The second active material layer 212a may be provided in a form in which at least a part of the second electrode 212 is coated with the second active material layer 212a. Both, or opposite, surfaces of the second electrode 212 may be coated with the second active material layer 212a, or, in an embodiment, only one surface of the second electrode 212 may be coated with the second active material layer 212a.

In an embodiment, the second electrode 212 functions as a negative electrode, and the second active material layer 212a may include a negative electrode active material.

The negative electrode active material may include a material capable of reversible intercalation/deintercalation of lithium ions, a lithium metal, a lithium metal alloy, a material capable of doping and dedoping of lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as amorphous, plate-like, flake-like, spherical, or fiber-like natural graphite or artificial graphite, and examples of the amorphous carbon may include soft carbon, hard carbon, mesophase pitch carbide, calcined coke, or the like.

As the lithium metal alloy, an alloy of lithium and a metal selected from Na, K, Rb, Cs, Fr, Be, Mg, Ca, Sr, Si, Sb, Pb, In, Zn, Ba, Ra, Ge, Al, and Sn may be used.

As the material capable of doping and dedepoing of lithium, a Si-based negative electrode active material or a Sn-based negative electrode active material may be used. The Si-based negative electrode active material may be silicon, a silicon-carbon composite, SiOₓ (0 < x ≤ 2), a Si-Q alloy (Q is selected from an alkali metal, an alkaline earth metal, a Group 13 element, a Group 14 element (excluding Si), a Group 15 element, a Group 16 element, a transition metal, a rare earth element, and a combination thereof), or a combination thereof. The Sn-based negative electrode active material may be Sn, SnO₂, a Sn-based alloy, or a combination thereof.

The silicon-carbon composite may be a composite of silicon and amorphous carbon. According to an embodiment, the silicon-carbon composite may be in the form of silicon particles and amorphous carbon coated on surfaces of the silicon particles. For example, the silicon-carbon composite may include a secondary particle (core) in which primary silicon particles are aggregated and an amorphous carbon coating layer (shell) located on a surface of the secondary particle. The amorphous carbon may be located between the primary silicon particles, for example, such that the primary silicon particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles and an amorphous carbon coating layer located on the surface of the core.

The Si-based negative electrode active material or Sn-based negative electrode active material may be used in combination with a carbon-based negative electrode active material.

The second active material layer 212a may further include a negative electrode conductive material and a negative electrode binder.

The negative electrode conductive material imparts conductivity to the second active material layer 212a, and any suitable electronically conductive material that does not cause a chemical change may be used. Examples of the negative electrode conductive material may include carbon-based materials, such as natural graphite, artificial graphite, carbon black, acetylene black, Ketjen black, carbon fibers, carbon nanofibers, and carbon nanotubes, metal-based materials in the form of a metal powder or metal fibers containing copper, nickel, aluminum, silver, or the like, conductive polymers, such as polyphenylene derivatives, or a mixture thereof.

The negative electrode binder well attaches particles constituting the negative electrode active material and also well attaches the negative electrode active material to the second electrode 212.

Examples of the negative electrode binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

If the aqueous binder is used as the negative electrode binder, the aqueous binder may further include a cellulose series compound capable of giving viscosity. As the cellulose series compound, one or more of carboxymethyl cellulose, hydroxypropylmethyl cellulose, methyl cellulose, and an alkali metal salt thereof may be mixed and used. In an embodiment, the alkali metal may be Na, K, or Li.

The dry binder may be a polymer material capable of being fiberized, for example, polytetrafluoroethylene, polyvinylidene fluoride, a polyvinylidene fluoride-hexafluoropropylene copolymer, polyethylene oxide, or a combination thereof.

The second electrode 212 may include the second uncoated portion 212b which is not coated with the second active material layer 212a. The second uncoated portion 212b according to an embodiment may be disposed at a region of an end portion of the second electrode 212. However, the second uncoated portion 212b is not limited thereto and, in an embodiment, may be formed over an entire edge region of the second electrode 212.

The separator 213 may be disposed between the first electrode 211 and the second electrode 212. The separator 213 may prevent or substantially prevent a short circuit between the first electrode 211 and the second electrode 212 while allowing movement of lithium ions between the first electrode 211 and the second electrode 212. In an embodiment, the separator 213 may be disposed to entirely surround a surface region of the electrode assembly 210. Accordingly, the separator 213 can prevent or substantially prevent the first electrode 211 and the second electrode 212 from being directly exposed to the outside of the electrode assembly 210.

The separator 213 may be made of polyethylene, polypropylene, polyvinylidene fluoride, or a multilayer film of two or more layers thereof, and a mixed multilayer film such as a two-layer separator of polyethylene/polypropylene, a three-layer separator of polyethylene/polypropylene/polyethylene, or a three-layer separator of polypropylene/polyethylene/polypropylene may be used.

The separator 213 may include a porous substrate and a coating layer including an organic material, an inorganic material, or a combination thereof, which is positioned on one surface or both, or opposite, surfaces of the porous substrate.

The porous substrate may be a polymer film made of one polymer selected from polyolefins such as polyethylene and polypropylene, polyesters such as polyethylene terephthalate and polybutylene terephthalate, polyacetal, polyamide, polyimide, polycarbonate, polyether ketone, polyarylether ketone, polyetherimide, polyamideimide, polybenzimidazole, polyether sulfone, polyphenylene oxide, a cyclic olefin copolymer, polyphenylene sulfide, polyethylene naphthalate, glass fiber, and polytetrafluoroethylene (e.g., Teflon), or a copolymer or mixture of two or more of the above materials.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be mixed in one coating layer or may be in the form of a coating layer including (or containing) an organic material and a coating layer including (or containing) an inorganic material which are stacked on each other.

The electrode assembly 210 according to an embodiment may further include a first tab 214 and a second tab 215.

The first tab 214 may be connected to the first electrode 211.

The first tab 214 according to an embodiment may have a foil shape extending from the first uncoated portion 211b of the first electrode 211 in a direction parallel to the first direction. In an embodiment, the first tab 214 may have a generally rectangular shape. However, a shape of the first tab 214 is not limited thereto and may be varied to any of various shapes.

In an embodiment, the first tab 214 may be formed integrally with the first electrode 211. For example, the first tab 214 may be a region of the first uncoated portion 211b remaining after a part of the first uncoated portion 211b is cut or removed by notching or the like. In an embodiment, the first tab 214 may be manufactured separately from the first electrode 211 and then connected to the first uncoated portion 211b by welding or the like. In an embodiment, a material of the first tab 214 may be the same as a material of the first electrode 211.

The first tab 214 may be provided as a plurality of first tabs. The first tabs 214 may each extend from a different one of the first uncoated portions 211b of the first electrodes 211. Neighboring first tabs 214 may be disposed to face each other in the second direction. That is, the plurality of first tabs 214 may be arranged in the second direction. The neighboring first tabs 214 may be disposed parallel to each other. The neighboring first tabs 214 may be in contact with each other and spaced by a thickness of the separator 213 from each other.

The plurality of first tabs 214 may be provided on each first electrode 211. For example, a pair of first tabs 214 may be formed on each first electrode 211. The pair of first tabs 214 formed on each first electrode 211 may be arranged in the third direction.

The second tab 215 may be connected to the second electrode 212.

The second tab 215 according to an embodiment may have a foil shape extending from the second uncoated portion 212b of the second electrode 212 in a direction parallel to the first direction. In an embodiment, extension directions of the first tab 214 and the second tab 215 may be opposite directions. In an embodiment, the second tab 215 may have a generally rectangular shape. However, a shape of the second tab 215 is not limited thereto and may be varied to any of various shapes.

In an embodiment, the second tab 215 may be formed integrally with the second electrode 212. For example, the second tab 215 may be a region of the second uncoated portion 212b remaining after a part of the second uncoated portion 212b is cut or removed by notching or the like. In an embodiment, the second tab 215 may be manufactured separately from the second electrode 212 and then connected to the second uncoated portion 212b by welding or the like. In an embodiment, a material of the second tab 215 may be the same as a material of the second electrode 212.

The second tab 215 may be provided as a plurality of second tabs. The second tabs 215 may each extend from a different one of the second uncoated portions 212b of the second electrodes 212. The neighboring second tabs 215 may be disposed to face each other in the second direction. That is, the plurality of second tabs 215 may be arranged in the second direction. The neighboring second tabs 215 may be disposed parallel to each other. The neighboring second tabs 215 may be in contact with each other and spaced by the thickness of the separator 213 from each other.

The plurality of second tabs 215 may be provided on each second electrode 212. For example, a pair of second tabs 215 may be formed on each second electrode 212. The pair of second tabs 215 formed on each second electrode 212 may be arranged in the third direction.

The case 220 may form a general exterior of the battery cell 200 and accommodate the electrode assembly 210. In an embodiment, the case 220 may include a conductive metal material, such as aluminum, an aluminum alloy, or nickel-plated steel.

The case 220 according to an embodiment may include a bottom portion 221, a first side portion 222, and a second side portion 223.

The bottom portion 221 may form an exterior of a lower side of the case 220. The bottom portion 221 according to an embodiment may have a rectangular plate shape. The bottom portion 221 may be disposed toward a bottom surface of the housing body 110. The bottom portion 221 may be disposed to face the bottom surface of the housing body 110 in the third direction.

The first side portion 222 may extend from the bottom portion 221 to form a part of an exterior of a side surface of the case 220.

The first side portion 222 according to an embodiment may have a rectangular plate shape extending from the bottom portion 221 in a direction parallel to the third direction. The first side portion 222 may be disposed perpendicular to the first direction. A lower end portion of the first side portion 222 may be connected to an edge of the bottom portion 221 disposed parallel to the second direction. An upper end portion of the first side portion 222 may be disposed toward the housing cover 120. The upper end portion of the first side portion 222 may be disposed to face the housing cover 120 in the third direction.

The first side portion 222 may be provided as a pair of first side portions. The pair of first side portions 222 may be disposed at a distance (e.g., a predetermined distance) from each other and opposite to each other in the first direction. The pair of first side portions 222 may be disposed parallel to each other.

The second side portion 223 may extend from the bottom portion 221 to form a remaining portion of the exterior of the side surface of the case 220.

The second side portion 223 according to an embodiment may have a rectangular plate shape extending from the bottom portion 221 in a direction parallel to the third direction. The second side portion 223 may be disposed to intersect the first side portion 222. As an example, the second side portion 223 may be disposed perpendicular to the second direction.

A lower end portion of the second side portion 223 may be connected to an edge of the bottom portion 221 disposed parallel to the first direction. An upper end portion of the second side portion 223 may be disposed toward the housing cover 120. The upper end portion of the second side portion 223 may be disposed to face the housing cover 120 in the third direction.

An area of the second side portion 223 may be greater than an area of the first side portion 222.

The second side portion 223 may be provided as a pair of second side portions. The pair of second side portions 223 may be disposed at a distance (e.g., a predetermined distance) from each other and opposite to each other in the second direction. The pair of second side portions 223 may be disposed parallel to each other.

Accordingly, the case 220 according to an embodiment may have a rectangular parallelepiped shape with an open upper end portion facing the housing cover 120.

The cap plate 230 may be joined to the case 220 to seal the case 220.

The cap plate 230 according to an embodiment may be formed to have a shape of a flat plate. The cap plate 230 may be disposed to face the case 220 in the third direction. As an example, an inner surface of the cap plate 230 may be disposed to face the open upper surface of the case 220. An outer surface of the cap plate 230 may be disposed to face an inner surface of the housing cover 120. The cap plate 230 may be disposed parallel to the bottom portion 221 of the case 220 and the housing cover 120.

The cap plate 230 may be seated on upper end portions of the second side portion 223 and the first side portion 222. In an embodiment, the cap plate 230 may be inserted into the case 220, and a perimeter surface thereof may be in contact with inner surfaces of the second side portion 223 and the first side portion 222. The cap plate 230 may be joined to the upper end portions of the second side portion 223 and the first side portion 222 by any of various types of joining methods, such as welding, bolting, fitting, and the like.

The terminals 240 may be joined to the cap plate 230 and may protrude outward from the cap plate 230. The terminal 240 may be electrically connected to the electrode assembly 210.

The terminal 240 according to an embodiment may pass through the cap plate 230 in the third direction. An upper end portion of the terminal 240 may protrude outward from the cap plate 230, and a lower end portion of the terminal 240 may protrude to the inside of the case 220. However, a shape of the terminal 240 is not limited to the shapes illustrated in FIGS. 3 to 6 and may be varied to any of various shapes.

The terminal 240 may be formed of an electrically conductive material, such as aluminum, nickel, copper, or the like.

The terminal 240 may be provided as a pair of terminals. The pair of terminals 240 may be disposed at a distance (e.g., a predetermined distance) from each other in the first direction on the cap plate 230.

Each of the pair of terminals 240 may each be connected to one of the first electrode 211 and the second electrode 212 of the electrode assembly 210. Accordingly, the pair of terminals 240 may each function as one of a positive electrode terminal and a negative electrode terminal of the battery cell 200.

As an example, a first terminal of the pair of terminals 240 may be connected to the first tab 214. In an embodiment, the first terminal of the pair of terminals 240 may be indirectly connected to the first tab 214 through a current collector 241 welded to the first tab 214. In an embodiment, the terminal 240 may be directly connected to the first tab 214.

In addition, a second terminal of the pair of terminals 240 may be connected to the second tab 215. In an embodiment, the second terminal of the pair of terminals 240 may be indirectly connected to the second tab 215 through the current collector 241 welded to the second tab 215. In an embodiment, the terminal 240 may be directly connected to the second tab 215.

In an embodiment, an insulator G may be installed between the electrode assembly 210 and the cap plate 230. The insulator G may be provided as a pair of insulators. The pair of insulators G may be spaced apart from each other in the first direction between the electrode assembly 210 and the cap plate 230. Each of the pair of insulators G may be disposed to surround a different terminal 240. The insulator G may be made of an insulating material, such as polyethylene (PE), polypropylene (PP), polyethylene terephthalate (PET), rubber, or the like.

The vent 250 may be provided in the cap plate 230 and configured to be opened and closed in conjunction with an internal pressure of the case 220. If the internal pressure of the case 220 increases to a set value or more due to an overcurrent, thermal runaway, or the like, the vent 250 may provide a discharge path for gas, flame, smoke, and the like generated inside the case 220. The vent 250 may be disposed between the terminals of the pair of terminals. As will be described below, a longitudinal direction of the vent 250 may be a direction parallel to the first direction, and a width direction of the vent 250 may be a direction parallel to the second direction.

The vent 250 may include a vent hole 251 and a vent plate 252.

The vent hole 251 may be formed to have a shape of a hole passing through the cap plate 230 in the third direction. A lower side of the vent hole 251 may be connected to an internal space of the case 220. An upper side of the vent hole 251 may be connected to an external space of the cap plate 230. However, a cross-sectional shape of the vent hole 251 may be varied to various shapes, such as an oval, circle, polygon, and the like. In an embodiment, an area of the vent 250, a length of the vent 250, and a width of the vent 250, which will be described below, may be the same as an area of the vent hole 251, a length of the vent hole 251, and a width of the vent hole 251. In an embodiment, a ratio of the area of the vent 250, that is, the vent hole 251, to an area of an upper surface of the cap plate 230 may be 0.05 or more, or 0.1.

The vent plate 252 may be opened and closed in conjunction with a change in an internal pressure of the case 220. That is, if the battery cell 200 operates normally, the vent plate 252 may maintain a closed state and seal the case 220. The vent plate 252 may be opened as the internal pressure of the case 220 increases to a certain pressure (e.g., a set value) or more due to overcharging, fire, or the like of the battery cell 200 and may discharge flame, gas, smoke, and the like generated from the inside of the case 220 to the outside of the case 220.

In an embodiment, the vent plate 252 according to an embodiment may be formed to have a shape of a flat plate. The vent plate 252 may be disposed to face the vent hole 251 in the third direction. In an embodiment, a thickness of the vent plate 252 may be less than a thickness of the cap plate 230. In an embodiment, an upper surface of the vent plate 252 may be joined to a lower surface of the cap plate 230 by any of various types of joining methods, such as welding, bolting, fitting, and the like. In an embodiment, the vent plate 252 may be inserted into the vent hole 251, and a perimeter surface of the vent plate 252 may be joined to an inner surface of the vent hole 251.

In an embodiment, a vent notch 253 may be formed on the vent plate 252 to induce a bursting operation of the vent plate 252. The vent notch 253 according to an embodiment may have a shape of a groove which is concavely recessed from an outer surface of the vent plate 252 to the inside of the vent plate 252. However, a shape of the vent notch 253 is not limited to the shape illustrated in FIG. 2 and may be formed to form any of various patterns on the vent plate 252.

The first insulation sheet 260 may be disposed to face the cap plate 230 to cover the vent 250. In other words, the first insulation sheet 260 may be (directly) disposed (e.g. laminated) on the cap plate 230 and completely covers the vent 250. The first insulation sheet 260 may protect the cap plate 230 and the vent 250 of an adjacent battery cell 200 from flame, gas, and the like generated if thermal runaway of one of the battery cells 200 occurs.

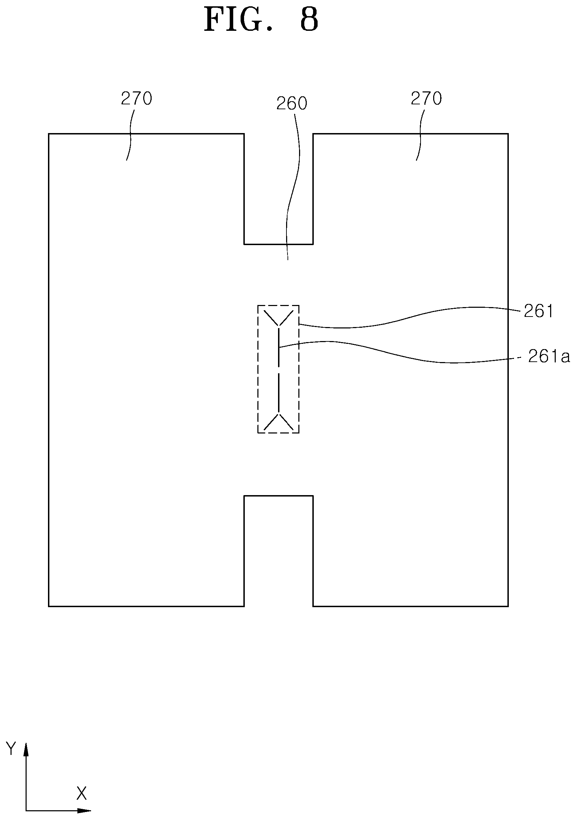

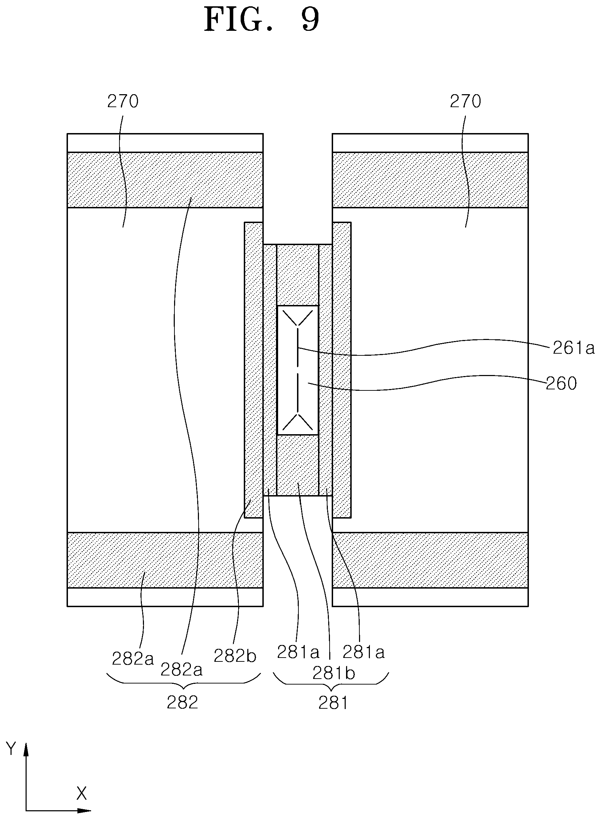

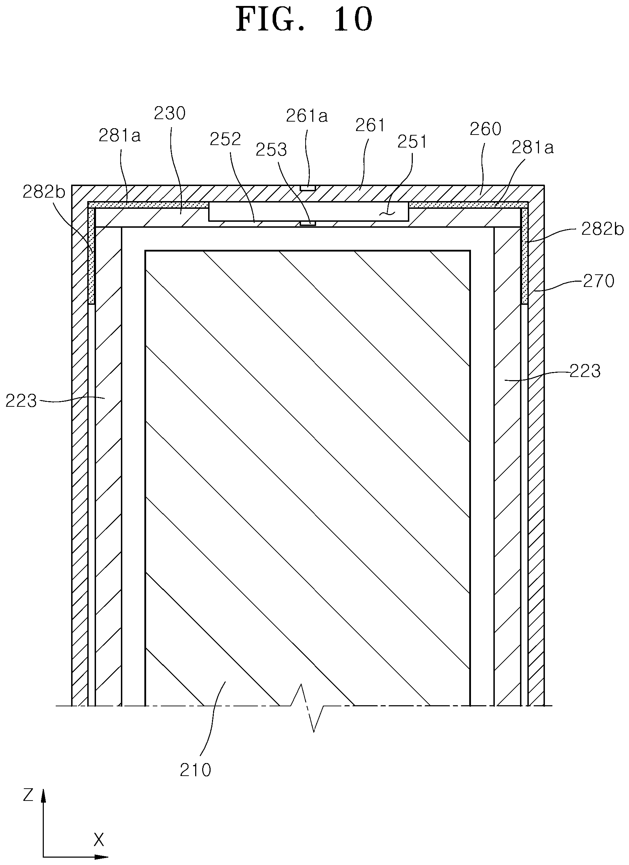

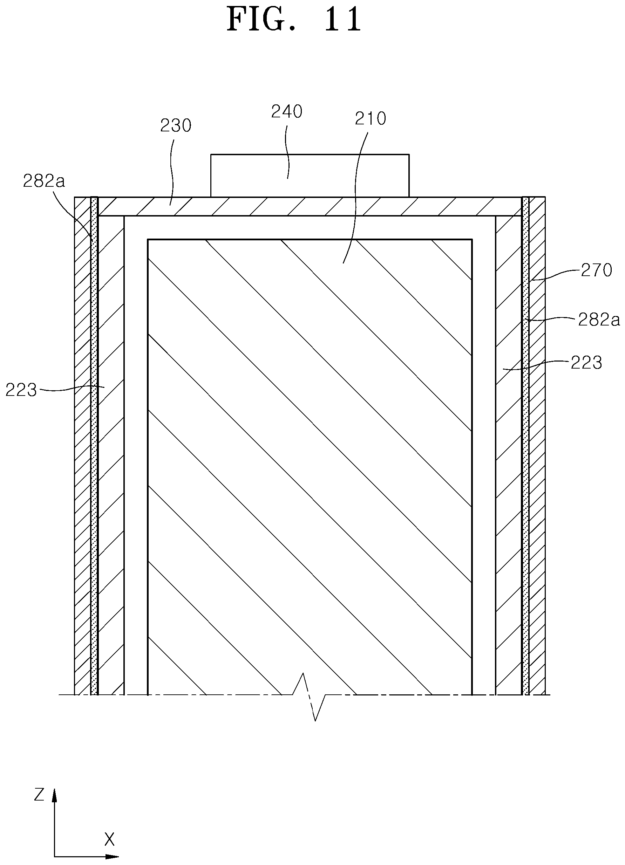

FIG. 8 is a schematic plan view illustrating a configuration of a first insulation sheet and a second insulation sheet according to an embodiment of the present disclosure; FIG. 9 is a rear view illustrating the first insulation sheet and the second insulation sheet illustrated in FIG. 8; FIG. 10 is a cross-sectional view along the line 10-10' in FIG. 6; and FIG. 11 is a cross-sectional view along the line 11-11' in FIG. 6.

Referring to FIGS. 3 to 11, the first insulation sheet 260 according to an embodiment may have a shape of a flat plate which is disposed perpendicular to the third direction. In other words, the first insulation sheet 260 according to an embodiment may have a plate-shape (e.g. a rectangular plate shape) and is layered (laminated) on the cap plate 230. The first insulation sheet 260 may be disposed between the pair of terminals 240 on the cap plate 230. So, the first insulation sheet 260 does not cover the terminals 240. A lower surface of the first insulation sheet 260 may be disposed to face the upper surface of the cap plate 230 positioned between the pair of terminals 240 in the third direction. In an embodiment, the first insulation sheet 260 may have a rectangular shape. In an embodiment, both, or opposite, end portions of the first insulation sheet 260 spaced apart from each other in the first direction may have a straight shape perpendicular to the first direction.

The first insulation sheet 260 is understood herein as a first thermal insulation sheet. The first insulation sheet 260 may include any of various types of (thermal) insulating materials, such as a material with high heat resistance and insulation, for example, mica, aerosol, aerofoam, polyacrylonitrile (PAN) fiber, silicone foam, and the like. In an embodiment, the thermal conductivity of the first insulation sheet 260 may be 0.01 W/m·K or more and 0.05 W/m·K or less.

An area of the first insulation sheet 260 may be greater than an area of the vent 250, and, in an embodiment, the vent hole 251. In other words, an area of the surface of the first insulation sheet 260 which is in (direct) contact with the vent, is greater than the corresponding area of the surface of the vent which is in direct contact with the first insulation sheet 260. That is, the first insulation sheet 260 may completely cover the vent 250, when laminated on the cap plate 230. In an embodiment, a ratio of the area of the first insulation sheet 260 to an area of the upper surface of the cap plate 230 may be 0.05 or more and 0.85 or less.

In an embodiment, the first insulation sheet 260 may include a fracture portion 261.

The fracture portion 261 may be provided in the first insulation sheet 260 and configured to be opened by the pressure of the gas discharged from the vent 250 if the thermal runaway of the battery cell 200 occurs.

The fracture portion 261 according to an embodiment may be a partial region of the first insulation sheet 260, which is disposed to directly face the vent 250, among an entire region of the first insulation sheet 260. In an embodiment, an area of the fracture portion 261 may be greater than the area of the vent 250. Although FIGS. 6 and 8 illustrate an example in which the fracture portion 261 has a rectangular shape, a shape of the fracture portion 261 is not limited thereto and may be varied to various shapes, such as an oval, circle, polygon, and the like.

In an embodiment, the fracture portion 261 may include a fracture notch 261a to be opened by the pressure of the gas discharged from the vent 250.

The fracture notch 261a according to an embodiment may have a shape of a groove which is concavely recessed from a surface of the fracture portion 261. The fracture notch 261a may induce an opening operation of the fracture portion 261 by the pressure of the gas and the like discharged from the vent 250 by partially decreasing the thickness of the fracture portion 261 facing the vent 250. In other words, the fracture notch 261a may be thinner in a third direction (i.e. in Z-axis direction shown Fig. 3) than the fracture portion 261 and the first insulation sheet 260. The fracture notch 261a may guide the discharging gas in case of a thermal runaway of the battery cell 200. In an embodiment, a shape of the fracture notch 261a may be the same as the shape of the vent notch 253 formed in the vent plate 252. However, a shape of the fracture notch 261a is not limited thereto and may be varied to various shapes within an area range of the fracture portion 261.

Although an example in which the fracture portion 261 includes the fracture notch 261a has been described above, the fracture portion 261 is not limited thereto. In an embodiment, the fracture portion 261 may be formed to have a thickness (i.e. in Z-axis direction shown Fig. 3) smaller than the thickness of the first insulation sheet 260 without the fracture notch 261a. That is, the fracture notch 261a is optional, and the fracture portion 261 provides a predetermined breaking point to be broken by internal gas pressure in the instance of a thermal runaway. Preferably, the thickness of the fracture portion 261 may be 5% to 50% less than the thickness of the first insulation sheet 260. In an embodiment, the thicknesses of the first insulation sheet 260 may be in a range of 0.1 mm to 3 mm and the thickness of the fracture portion 261 may be 5% to 50% less than the thickness of the first insulation sheet 260. In aforementioned embodiments with a fracture portion 261, the thickness of the fracture notch 261a may be 5% to 15% less than the thickness of fracture portion 261. For example, the first insulation sheet 260 may have a thickness of 0.1 mm, the fracture portion 261 may have a thickness of 0.05 mm, and the fracture notch 261a may have a thickness of 0.042 mm.

The second insulation sheet 270 may extend from the first insulation sheet 260 and may be disposed to face the case 220. The second insulation sheet 270 is understood herein as a second thermal insulation sheet. The second insulation sheet 270 may be disposed between the battery cells 200 adjacent to each other in the second direction. The second insulation sheet 270 may prevent or substantially prevent chain ignition by blocking heat transfer between adjacent battery cells 200 if thermal runaway of one battery cell 200 occurs.

The second insulation sheet 270 may be provided as a pair of second insulation sheets. Each of the pair of second insulation sheets 270 may be disposed to extend from a side of both, or opposite, sides of the first insulation sheet 260 and face a surface of different surfaces of the case 220.

The second insulation sheet 270 according to an embodiment may have a shape of a flat plate (e.g. a rectangular plate shape), which is disposed perpendicular to the second direction. A first end portion of the second insulation sheet 270 may be connected to a first end portion of the first insulation sheet 260. The second insulation sheet 270 may be formed integrally with the first insulation sheet 260, or manufactured separately from the first insulation sheet 260 and then connected to the first insulation sheet 260. The second insulation sheet 270 may be bent in the third direction from an end portion of the first insulation sheet 260. The second insulation sheet 270 may be disposed to face the second side portion 223 of the case 220 in the second direction. Although FIGS. 8 and 9 illustrate an example in which the second insulation sheet 270 has a rectangular shape, the second insulation sheet 270 is not limited thereto and may be varied to various shapes.

In an embodiment, a ratio of an area of the second insulation sheet 270 to an area of the second side portion 223 may be in a range from 0.9 to 1.

The second insulation sheet 270 may include any of various types of (thermal) insulating materials, such as a material with high heat resistance and insulation, for example, mica, aerosol, aerofoam, polyacrylonitrile (PAN) fiber, silicone foam, and the like. In an embodiment, the thermal conductivity of the second insulation sheet 270 may be 0.01 W/m. K or more and 0.05 W/m·K or less.

In an embodiment, a thickness of the first insulation sheet 260 may be less than a thickness of the second insulation sheet 270 or may be equal to the thickness of the second insulation sheet 270. In an embodiment, for example, a ratio of the thickness of the first insulation sheet 260 to the thickness of the second insulation sheet 270 may be 0.3 or more and 1 or less.

In an embodiment, the thicknesses of the first insulation sheet 260 and the second insulation sheet 270 may be 0.1 mm or more and 3 mm or less, preferably in arrange of 0.5 mm to 2 mm.

The pair of second insulation sheets 270 may be bent in the third direction from both, or opposite, end portions of the first insulation sheet 260 spaced apart from each other in the second direction. The second insulation sheets 270 of the pair of second insulation sheets 270 may be disposed to face each other in the second direction with the case 220 interposed therebetween. Each of the pair of second insulation sheets 270 may be disposed to face a different second side portion 223 of the case 220.

The pair of second insulation sheets 270 may be stacked in the second direction between the pair of battery cells 200 disposed adjacent to each other in the second direction. Accordingly, the battery module according to an embodiment can further reinforce insulation performance between the pair of battery cells 200 disposed adjacent to each other. The second insulation sheet 270 disposed between the pair of battery cells 200 disposed adjacent to each other may be maintained in close contact with the case 220 by a pressing force between the battery cells 200.

A thickness of the second insulation sheet 270 directly facing the housing body 110 in an outermost battery cell 200 among the plurality of battery cells 200 may be less than or equal to thicknesses of the remaining second insulation sheets 270. In an embodiment, for example, a ratio of the thickness of the second insulation sheet 270 directly facing the housing body 110 to the thickness of the second insulation sheet 270 disposed between the neighboring battery cells 200 may be 0.5 or more and 1 or less. In a preferred embodiment, a ratio of the thickness of the second insulation sheet 270 directly facing the housing body 110 to the thickness of the second insulation sheet 270 disposed between the neighboring battery cells 200 may be in a range of 0.5 to 0.9. This way, a battery module comprising a plurality of battery cells as described above may be more compact.

The battery cell 200 according to an embodiment may further include a first adhesive member 281.

The first adhesive member 281 may be disposed between the first insulation sheet 260 and the cap plate 230. The first adhesive member 281 may fix the first insulation sheet 260 to the cap plate 230.

In an embodiment, the first adhesive member 281 may be an adhesive formed of only an adhesive material, such as polyurethane, epoxy, cyanoacrylate, or the like and implemented in the form of an adhesive tape in which a surface of a film or sheet is coated with an adhesive material. In an embodiment, the first adhesive member 281 may further include a flame retardant material, such as tribromophenoxyethane (1,2-Bis(2,4,6-tribromophenoxy)ethane), chlorinated paraffin, or the like, to prevent or substantially prevent damage due to a high temperature.

The first adhesive member 281 according to an embodiment may include a blocking portion 281a.

The blocking portion 281a may block a flame or gas from being transferred to a neighboring battery cell 200 through a gap between the cap plate 230 and the first insulation sheet 260 if the vent 250 of one battery cell 200 is opened.

The blocking portion 281a according to an embodiment may be a partial region of the first adhesive member 281, which is disposed to face the vent 250 in the second direction, among an entire region of the first adhesive member 281.

The blocking portion 281a may be provided as a pair of blocking portions. The pair of blocking portions 281a may be disposed apart from each other in the second direction with the vent 250 interposed therebetween.

A distance between the pair of blocking portions 281a may be equal to or greater than the width of the vent 250 parallel to the second direction. The distance between the pair of blocking portions 281a may be equal to or greater than the width of the fracture portion 261 parallel to the second direction. Accordingly, the blocking portion 281a may not be disposed to directly face the vent 250 and the fracture portion 261 in the third direction.

In an embodiment, a total of the width of the pair of blocking portions 281a parallel to the second direction and the width of the vent 250 may be equal to or less than the width of the cap plate 230 parallel to the second direction. Accordingly, the blocking portion 281a may not protrude outward from the cap plate 230.

In an embodiment, a length of the blocking portion 281a parallel to the first direction may be greater than a length of the vent 250. As an example, the length of the blocking portion 281a parallel to the first direction may be equal to a length of the first insulation sheet 260 parallel to the first direction.

The first adhesive member 281 according to an embodiment may further include a connection portion 281b.

The connection portion 281b may be disposed between the pair of blocking portions 281a.

The connection portion 281b according to an embodiment may be a remaining region of the first adhesive member 281, which is disposed to face the vent 250 in the first direction and connects the pair of blocking portions 281a, among the entire region of the first adhesive member 281.

The connection portion 281b may be provided as a pair of connection portions. The pair of connection portions 281b may be disposed apart from each other in the first direction with the vent 250 interposed therebetween.

In an embodiment, a distance between the pair of connection portions 281b may be equal to or greater than the length of the vent 250 parallel to the first direction. The distance between the pair of connection portions 281b may be equal to or greater than the length of the fracture portion 261 parallel to the first direction. Accordingly, the connection portion 281b may not be disposed to directly face the vent 250 and the fracture portion 261 in the third direction.

Both, or opposite, end portions of the connection portion 281b, which are spaced apart from each other in the second direction, may each be connected to one of the pair of blocking portions 281a. Although FIG. 9 illustrates an example in which a boundary line is marked in a boundary region of the blocking portion 281a and the connection portion 281b for convenience of description, the present disclosure is not limited thereto, and, in an embodiment, the connection portion 281b may be connected to the blocking portion 281a without any boundary line.

The battery cell 200 according to an embodiment may further include a second adhesive member 282.

The second adhesive member 282 may be disposed between the second insulation sheet 270 and the second side portion 223. The second adhesive member 282 may fix the second insulation sheet 270 to the second side portion 223.

In an embodiment, the second adhesive member 282 may be an adhesive formed of only an adhesive material, such as polyurethane, epoxy, cyanoacrylate, or the like and implemented in the form of an adhesive tape in which a surface of a film or sheet is coated with an adhesive material. In an embodiment, the second adhesive member 282 may further include a flame-retardant material, such as tribromophenoxyethane (e.g. 1,2-Bis(2,4,6-tribromophenoxy)ethane), chlorinated paraffin, or the like, to prevent or substantially prevent damage due to a high temperature.

The second adhesive member 282 may be provided as a pair of second adhesive members. The pair of second adhesive members 282 may each be disposed between the second insulation sheet 270 and the second side portion 223.

The second adhesive member 282 according to the present embodiment may include a side adhesive portion 282a.

The side adhesive portion 282a may be spaced apart from the first adhesive member 281 and may fix the second insulation sheet 270 to the second side portion 223.

The side adhesive portion 282a according to an embodiment may be provided as a pair of side adhesive portions. The pair of side adhesive portions 282a may be disposed at a distance (e.g., a predetermined distance) from each other in the first direction. The pair of side adhesive portions 282a may each be disposed at one of both, or opposite, edges of the second insulation sheet 270. Although FIG. 9 illustrates an example in which the side adhesive portion 282a has a rectangular shape, a shape of the side adhesive portion 282a is not limited thereto and may be varied to various shapes.

Based on FIG. 11, a length of the side adhesive portion 282a parallel to the third direction may be equal to or less than a length of the second insulation sheet 270 parallel to the third direction. A distance between the pair of side adhesive portions 282a may be greater than the length of the first insulation sheet 260 parallel to the first direction.

In an embodiment, a ratio of a total area of the pair of side adhesive portions 282a to the area of the second insulation sheet 270 may be 0.05 or more.

The second adhesive member 282 according to an embodiment may further include an extension adhesive portion 282b.

The extension adhesive portion 282b may extend from the first adhesive member 281 and fix the second insulation sheet 270 to the second side portion 223. The extension adhesive portion 282b can prevent or substantially prevent the second insulation sheet 270 from being lifted from the second side portion 223 by fixing a connection portion of the first insulation sheet 260 and the second insulation sheet 270 along with the blocking portion 281a.

The extension adhesive portion 282b according to an embodiment may extend in the third direction from an end portion of the blocking portion 281a, which is disposed perpendicular to the second direction. The extension adhesive portion 282b may be disposed perpendicular to the blocking portion 281a. The extension adhesive portion 282b may be disposed between the pair of side adhesive portions 282a. Both, or opposite, end portions of the extension adhesive portion 282b may be disposed by a distance (e.g., a predetermined distance) from the pair of side adhesive portions 282a.

A length of the extension adhesive portion 282b parallel to the first direction may be equal to the length of the blocking portion 281a. A length of the extension adhesive portion 282b parallel to the third direction may be equal to or smaller than the length of the second insulation sheet 270 parallel to the third direction.

The plurality of battery cells 200 may be electrically connected by a bus bar B.

The bus bar B according to an embodiment may be formed of an electrically conductive material, such as copper, nickel, aluminum, or the like. The bus bar B may be disposed between the battery cell 200 and the housing cover 120. Both, or opposite, end portions of the bus bar B may each be connected to one of the terminals 240 of any one of the pair of battery cells 200 and the terminal 240 of the other of the pair of battery cells 200, which are disposed adjacent to each other in the second direction. Depending on a type of the terminals 240 connected to both, or opposite, end portions of the bus bar B, the bus bar B may connect the battery cells 200 disposed adjacent to each other in the second direction in series or in parallel. However, a shape of the bus bar B is not limited to the shape illustrated in FIG. 1 and may be varied to any of various shapes which may electrically connect the neighboring battery cells 200.

The bus bar B may be provided as a plurality of bus bars. Each bus bar B may be connected to the terminal 240 of a different battery cell 200. A number of bus bars B may be varied to various numbers depending on a number of battery cells 200, the series or connection structure of the battery cells 200, or the like.

The battery module according to an embodiment may further include a holder 300.

The holder 300 may be disposed inside the housing 100 and disposed to face the cap plate 230 of the battery cell 200. The holder 300 may support the bus bar B inside the housing 100 and protect the battery cell 200 from an external impact or the like.

The holder 300 according to an embodiment may have a plate shape which is disposed perpendicular to the third direction between the cap plates 230 of the battery cells 200. The holder 300 may be formed of an insulating material. Accordingly, the holder may be electrically insulated from the battery cell 200 and the bus bar B.

The holder 300 may support the bus bar B. As an example, a holder hole 301, which passes through the holder 300 in the third direction, may be formed in the holder 300. The holder hole 301 may be provided as a plurality of holder holes. The plurality of holder holes 301 may be disposed at both, or opposite, sides of the holder 300. As an example, the plurality of holder holes 301 may be disposed in two rows in the first direction. The plurality of holder holes 301 provided in each row may be arranged in the second direction. Each holder hole 311 may be disposed to face one of the terminals 240 of different battery cells 200 arranged in the second direction. The bus bar B may be joined to the holder 300 by any of various types of joining methods, such as bolting, fitting, hooking, and the like. Both, or opposite, end portions of the bus bar B may be in contact with the terminals 240 disposed adjacent to each other through the holder hole 311 and connected to the terminals 240 by welding or the like.

In an embodiment, a plurality of holder vents 302 may be formed in the holder 300.

The holder vents 302 may be provided in the holder 300 and may guide the discharge of a gas and flame discharged from the vent 250.

The holder vent 302 according to an embodiment may have a shape of a hole which vertically passes through the holder 300 in the third direction. The holder vent 302 may be disposed between different rows of the plurality of holder holes 301 spaced apart from each other in the first direction. The holder vent 302 may be disposed to face the vent 250 in the third direction with the fracture portion 261 interposed therebetween. In an embodiment, an area of the holder vent 302 may be greater than the area of the vent 250, and, in an embodiment, the vent hole 251.

The plurality of holder vents 302 may be arranged at a distance (e.g., a predetermined distance) in the second direction. Each holder vent 302 may be disposed to face the vent 250 of a different battery cell 200. A number of holder vents 302 and a distance between neighboring holder vents 302 may be varied to any of various numbers depending on a number of vents 250, a distance between the vents 250, or the like.

Herein, an operation of the battery module according to an embodiment of the present disclosure will be described.

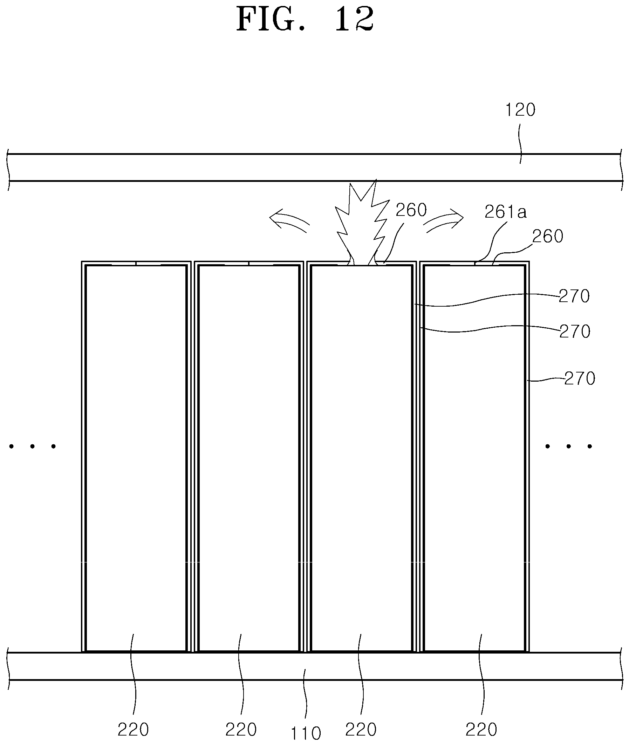

FIG. 12 is a schematic view illustrating an operation state of the battery module according to an embodiment of the present disclosure.

Referring to FIGS. 1 to 12, if the vent 250 of one battery cell 200 is opened due to an overcurrent or thermal runaway, gas and flame are discharged from the vent 250 of the one battery cell 200.

The fracture portion 261 of the first insulation sheet 260 disposed to face the opened vent 250 is opened by the pressure of the gas discharged from the vent 250.

During this process, as the second insulation sheet 270 extending from both, or opposite, sides of the first insulation sheet 260 is firmly fixed to the pair of second side portions 223 by the pressing force between the second adhesive member 282 and the battery cells 200, the first insulation sheet 260 may maintain a fixed state at the correct position without being separated from the cap plate 230.

Gas and flame flowing into a space between the first insulation sheet 260 and the housing cover 120 may be discharged to the outside of the battery module through an exhaust hole or the like provided in the housing cover 120 or the housing body 110 without being introduced into the vents 250 of the remaining battery cells 200 by the first insulation sheet 260 covering the vents 250 of the remaining battery cells 200.

Herein, a battery module according to another embodiment of the present disclosure will be described.

The battery module according to the present embodiment may differ from the battery module according to the previous embodiment of the present disclosure in a configuration of the battery cell 200.

Accordingly, in describing the battery module according to the present embodiment, only the configuration of the battery cell 200 which differs from that of the battery module according to the previous embodiment of the present disclosure will be described.

The description of the battery module according to the previous embodiment of the present disclosure may be applied to the remaining components of the battery module according to the present embodiment.

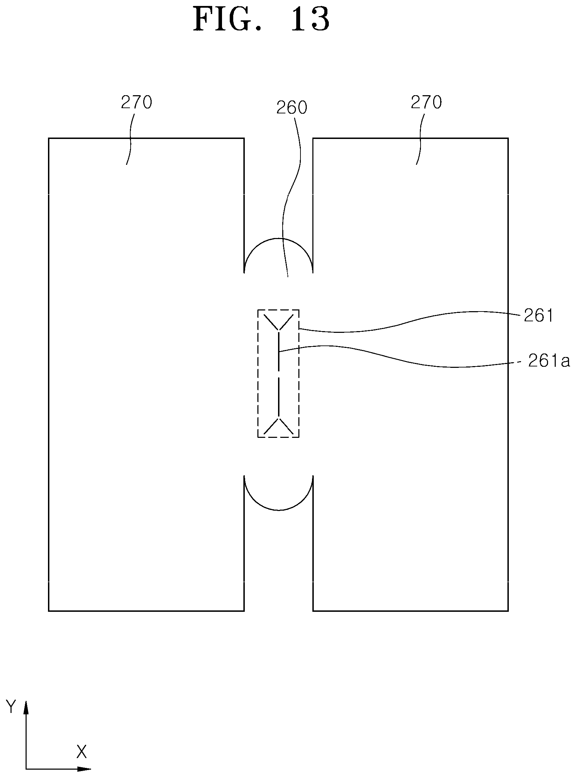

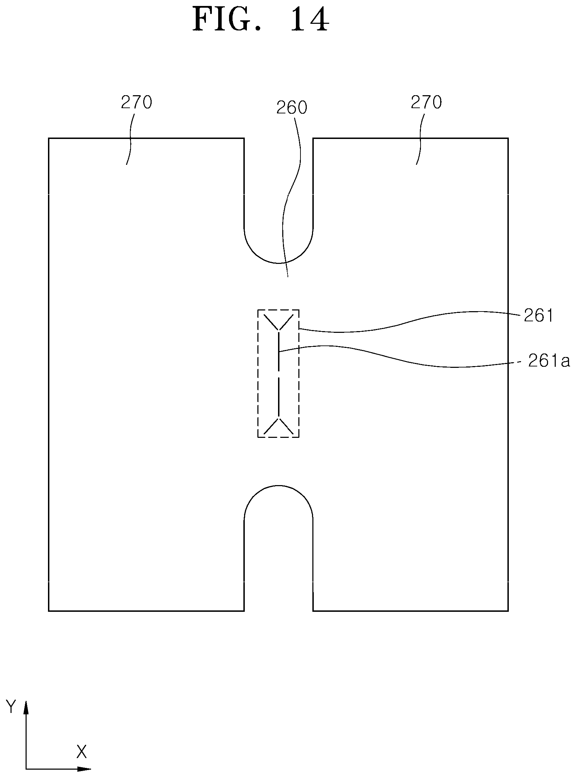

FIG. 13 is a schematic view illustrating a configuration of a first insulation sheet according to another embodiment of the present disclosure; and FIG. 14 is a schematic view illustrating a modified example of the first insulation sheet illustrated in FIG. 13.

Referring to FIGS. 13 and 14, in an embodiment, both, or opposite, end portions of the first insulation sheet 260 spaced apart from each other in the first direction may be curved.

In an embodiment, as illustrated in FIG. 13, both, or opposite, end portions of the first insulation sheet 260 spaced apart from each other in the first direction may convexly protrude toward the terminal 240. Accordingly, the first insulation sheet 260 according to an embodiment may cover the cap plate 230 over a wider area.

In an embodiment, as illustrated in FIG. 14, both, or opposite, end portions of the first insulation sheet 260 spaced apart from each other in the first direction may be concavely formed toward the fracture portion 261. Accordingly, the first insulation sheet 260 according to an embodiment can be prevented or substantially prevented from interfering with a shape of the terminal 240 or a separate component on the cap plate 230.

Herein, a battery module according to another embodiment of the present disclosure will be described.

The battery module according to the present embodiment may differ from the battery modules according to the previous embodiments of the present disclosure in a configuration of the battery cell 200.

Accordingly, in describing the battery module according to the present embodiment, only the configuration of the battery cell 200 which differs from those of the battery modules according to the previous embodiments of the present disclosure will be described.

The description of the battery modules according to the previous embodiments of the present disclosure may be applied to the remaining components of the battery module according to the present embodiment.

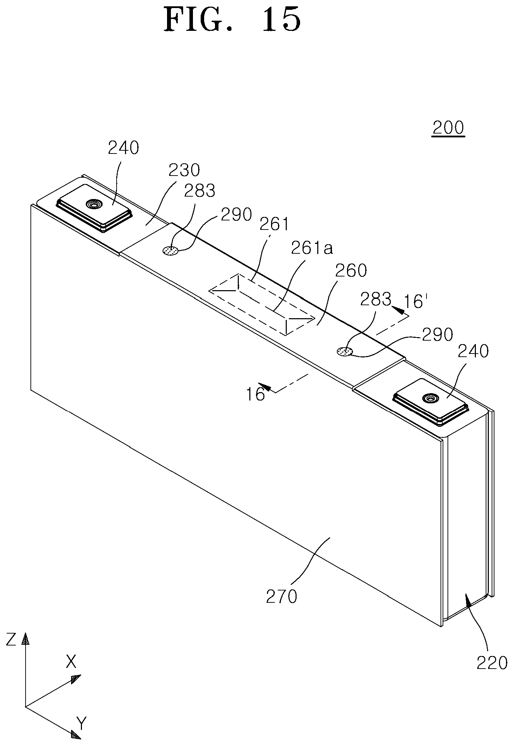

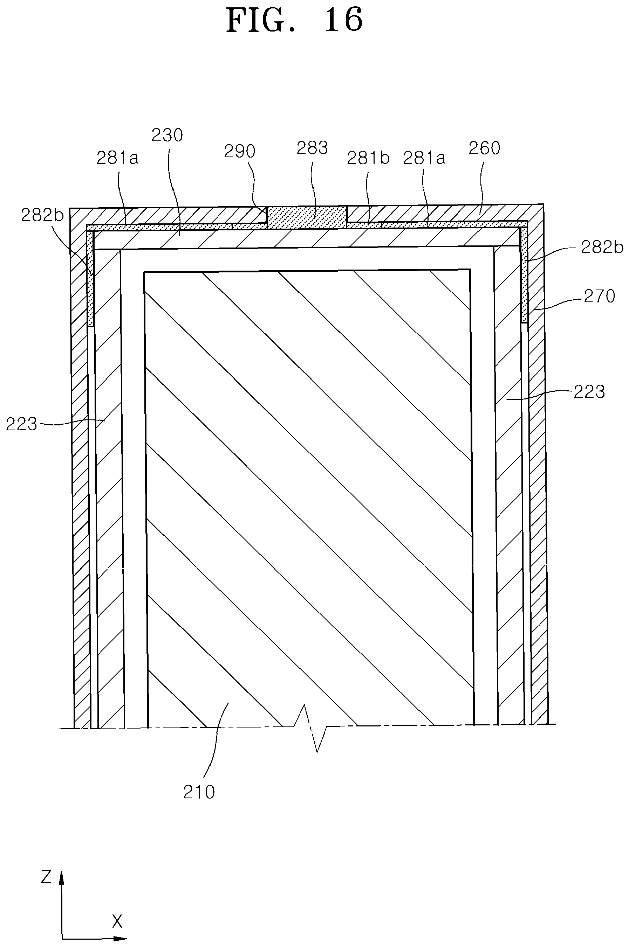

FIG. 15 is a schematic perspective view illustrating a configuration of a battery cell according to another embodiment of the present disclosure; and FIG. 16 is a schematic cross-sectional view along the line 16-16' in FIG. 15.

Referring to FIGS. 15 and 16, the battery cell 200 according to an embodiment may further include a pinhole 290 and an adhesive filler 283.

The pinhole 290 may have the shape of a hole passing through the first insulation sheet 260 in the third direction. The pinhole 290 may be disposed apart from the fracture portion 261.

The pinhole 290 may be formed as one or more pinholes. As an example, the pinhole 290 may be provided as a pair of pinholes. The pair of pinholes 290 may be disposed apart from each other in the first direction with the fracture portion 261 interposed therebetween. However, a number of pinholes 290 is not limited thereto and may be varied to various numbers such as one or three, for example. In addition, a cross-sectional shape of the pinhole 290 is not limited to the circular shape illustrated in FIG. 15 and may be varied to various shapes, such as an oval, polygon, and the like.

The adhesive filler 283 may protrude from the first adhesive member 281 and may be disposed inside the pinhole 290.

The adhesive filler 283 according to an embodiment may be implemented in the form of an adhesive formed of an adhesive material, such as polyurethane, epoxy, cyanoacrylate, or the like. The adhesive filler 283 may protrude from the first adhesive member 281 in a direction parallel to the third direction. The adhesive filler 283 may protrude from the blocking portion 281a depending on a position of the pinhole 290 and protrude from the connection portion 281b.

In an embodiment, the adhesive filler 283 may be disposed inside the pinhole 290 by being injected into the pinhole 290 in a liquid state and then cured. An outer circumferential surface of the adhesive filler 283 may be fixed to an inner circumferential surface of the pinhole 290. In an embodiment, a lower end portion of the adhesive filler 283 may be integrally connected to the first adhesive member 281. Accordingly, the adhesive filler 283 can effectively prevent or substantially prevent the first insulation sheet 260 from being separated by further reinforcing bonding strength between the first insulation sheet 260 and the first adhesive member 281.

Herein, a battery module according to another embodiment of the present disclosure will be described.

The battery module according to the present embodiment may differ from the battery modules according to the previous embodiments of the present disclosure in a configuration of the battery cell 200.

Accordingly, in describing the battery module according to the present embodiment, only the configuration of the battery cell 200 which differs from those of the battery modules according to the previous embodiments of the present disclosure will be described.

The description of the battery modules according to the previous embodiments of the present disclosure may be applied to the remaining components of the battery module according to the present embodiment.

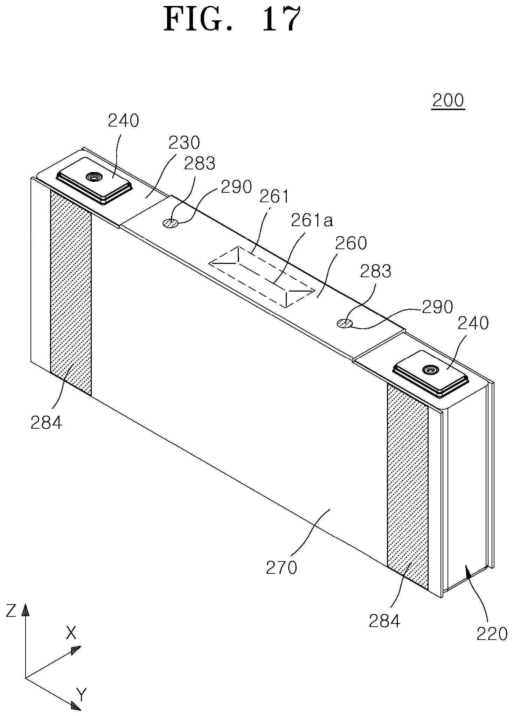

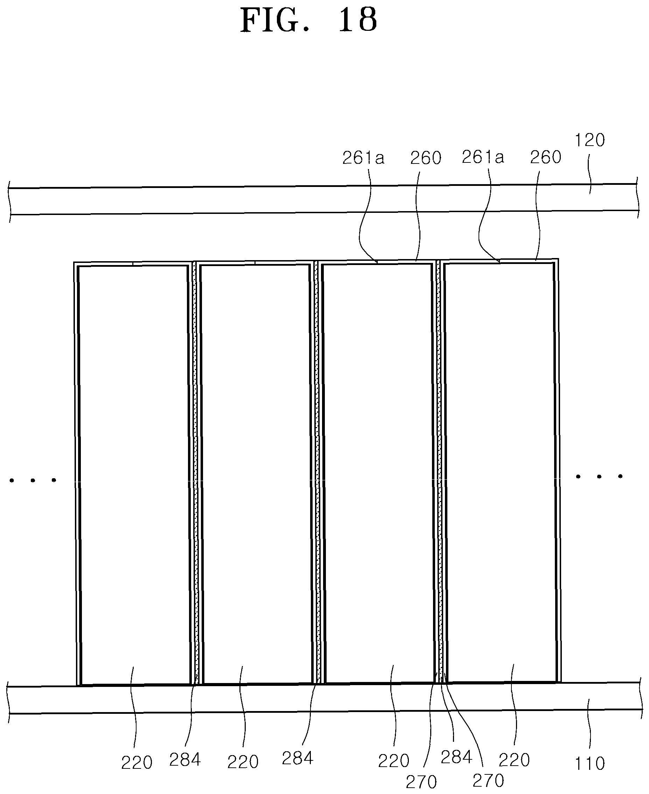

FIG. 17 is a schematic perspective view illustrating a configuration of a battery cell according to another embodiment of the present disclosure; and FIG. 18 is a schematic cross-sectional view illustrating a configuration of a battery module according to another embodiment of the present disclosure.

Referring to FIGS. 17 and 18, the battery cell 200 according to the present embodiment may further include a third adhesive member 284.

The third adhesive member 284 may be disposed at an outer side of the second insulation sheet 270. The third adhesive member 284 may be disposed on an outer surface of the second insulation sheet 270 which does not directly face the case 220. The third adhesive member 284 may mutually fix the second insulation sheets 270 of the battery cells 200 disposed adjacent to each other.

The third adhesive member 284 according to an embodiment may be disposed on an outer surface of one of the pair of second insulation sheets 270 extending from the first insulation sheet 260.

In an embodiment, the third adhesive member 284 may have a form of an adhesive formed of only an adhesive material, such as polyurethane, epoxy, cyanoacrylate, or the like and implemented in the form of an adhesive tape in which a surface of a film or sheet is coated with an adhesive material. In an embodiment, the third adhesive member 284 may further include a flame-retardant material, such as tribromophenoxyethane (e.g. 1,2-Bis(2,4,6-tribromophenoxy)ethane), chlorinated paraffin, or the like, to prevent or substantially prevent damage due to a high temperature.

Although FIG. 17 illustrates an example in which the third adhesive member 284 has a rectangular shape, a shape of the third adhesive member 284 is not limited thereto and may be varied to various shapes.

In an embodiment, the third adhesive member 284 may be provided as a pair of third adhesive members. The pair of third adhesive members 284 may be disposed at a distance (e.g., a predetermined distance) from each other in the first direction. The pair of third adhesive members 284 may each be disposed at one of both, or opposite, edges of the second insulation sheet 270. Each third adhesive member 284 may be disposed to face the side adhesive portion 282a with the second insulation sheet 270 interposed therebetween. In an embodiment, the third adhesive member 284 may be disposed to be misaligned with the side adhesive portion 282a with respect to the second direction.

In an embodiment, based on FIG. 17, a length of the third adhesive member 284 parallel to the third direction may be equal to or less than the length of the second insulation sheet 270 parallel to the third direction.

An area of the third adhesive member 284 may differ from an area of the side adhesive portion 282a. As an example, the area of the third adhesive member 284 may be smaller than the area of the side adhesive portion 282a.

A surface of the third adhesive member 284 may be fixed to the second insulation sheet 270 provided in one of the pair of battery cells 200 disposed adjacent to each other, and another surface of the third adhesive member 284 may be fixed to the second insulation sheet 270 provided in the other of the pair of battery cells 200. Accordingly, the third adhesive member 284 according to an embodiment can prevent or substantially prevent the first insulation sheet 260 from being separated by the thermal runaway of the battery cell 200 by additionally securing bonding strength between the second insulation sheets 270 of different battery cells 200.

According to the present disclosure, by arranging a first insulation sheet having heat resistance and insulation at a position facing a vent of a battery cell, it is possible to prevent chain ignition due to thermal runaway of one battery cell.

According to embodiments of the present disclosure, a pair of second insulation sheets positioned between neighboring battery cells is connected integrally with the first insulation sheet, and the first insulation sheet may be prevented or substantially prevented from being separated by a pressure of gas generated if the vent is opened.

However, aspects and effects obtainable through the present disclosure are not limited to the above aspects and effects, and other technical aspects and effects that are not mentioned will be clearly understood by those skilled in the art from the description of the present disclosure.

While the present disclosure has been described with reference to some embodiments shown in the drawings, these embodiments are merely illustrative and it is to be understood that various modifications and equivalent other embodiments can be derived by those skilled in the art on the basis of the embodiments.

## Claims

1. A battery cell (200) comprising:
an electrode assembly (210);
a case (220) accommodating the electrode assembly (210);
a cap plate (230) sealing the case (220);
a pair of terminals (240) protruding from the cap plate (230) and spaced apart from each other in a first direction;
a vent (250) between the terminals (240);
a first insulation sheet (260) facing the cap plate (230); and
a second insulation sheet (270) extending from the first insulation sheet (260) and facing the case (220).

2. The battery cell (200) as claimed in claim 1, wherein the first insulation sheet (260) is between the terminals (240).

3. The battery cell (200) as claimed in one of claims 1 or 2, wherein an area of the first insulation sheet (260) is greater than an area of the vent (250).

4. The battery cell (200) as claimed in one of the preceding claims, wherein the first insulation sheet (260) comprises a fracture portion (261) facing the vent (250) and configured to be opened by a pressure of a gas discharged from the vent (250).

5. The battery cell (200) as claimed in one of the preceding claims, further comprising a first adhesive member (281) between the first insulation sheet (260) and the cap plate (230) to fix the first insulation sheet (260).

6. The battery cell (200) as claimed in claim 5, wherein the first adhesive member (281) comprises a pair of blocking portions (281a) spaced apart from each other in a second direction intersecting the first direction.

7. The battery cell (200) as claimed in claim 6, wherein the blocking portions (281a) are at opposite sides of the vent (250).

8. The battery cell (200) as claimed in one of claims 6 or 7, wherein a distance between the blocking portions (281a) is equal to or greater than a width of the vent (250).

9. The battery cell (200) as claimed in one of claims 5 to 8, further comprising:
one or more pinholes (290) passing through the first insulation sheet (260); and
an adhesive filler (283) protruding from the first adhesive member (281) and arranged in a pinhole (290) of the one or more pinholes (290).

10. The battery cell (200) as claimed in one of the preceding claims, wherein the case (220) comprises:
a bottom portion (221);
a pair of first side portions (222) extending from the bottom portion (221) and facing each other in the first direction; and
a pair of second side portions (223) extending from the bottom portion (221) and facing each other in a second direction intersecting the first direction, and
the second insulation sheet (270) faces a second side portion (223) of the pair of second side portions (223).

11. The battery cell (200) as claimed in claim 10, further comprising:
a first adhesive member (281) between the first insulation sheet (260) and the cap plate (230) to fix the first insulation sheet (260); and
a second adhesive member (282) between the second insulation sheet (270) and the second side portion (223) to fix the second insulation sheet (270).

12. The battery cell (200) as claimed in claim 11, wherein the second adhesive member (282) comprises a pair of side adhesive portions (282a) spaced apart from the first adhesive member (281) and facing each other in the first direction.

13. The battery cell (200) as claimed in claim 12, wherein the second adhesive member (282) further comprises an extension adhesive portion (282b) extending from the first adhesive member (281) and arranged between the side adhesive portions (282a).

14. The battery cell (200) as claimed in one of claims 10 to 13, further comprising a third adhesive member (284) at an outer side of the second insulation sheet (270).

15. A battery module comprising:
a housing (100); and
a plurality of battery cells (200) according to one of the preceding claims accommodated in the housing (100),
wherein each of the battery cells (200) comprises:
an electrode assembly (210);
a case (220) accommodating the electrode assembly (210);
a cap plate (230) sealing the case (220);
a pair of terminals (240) protruding from the cap plate (230) and spaced apart from each other in a first direction;
a vent (250) between the terminals (240);
a first insulation sheet (260) facing the cap plate (230); and
a second insulation sheet (270) extending from the first insulation sheet (260) and facing the case (220).
